(19) Europäisches Patentamt / European Patent Office / Office européen des brevets

(11) **EP 3 369 000 B1**

(12) **FASCICULE DE BREVET EUROPEEN**

(45) Date de publication et mention
de la délivrance du brevet:
**09.08.2023 Bulletin 2023/32**

(21) Numéro de dépôt: **16781381.5**

(22) Date de dépôt: **11.10.2016**

(51) Classification Internationale des Brevets (IPC):
**G06F 17/18** (2006.01)    **F03B 13/16** (2006.01)
**G01C 13/00** (2006.01)

(52) Classification Coopérative des Brevets (CPC):
**F03B 13/16; G01C 13/004; G06F 17/18;**
F05B 2240/95; F05B 2260/821; F05B 2260/8211;
Y02B 10/30; Y02E 10/20; Y02E 10/30

(86) Numéro de dépôt international:
**PCT/EP2016/074354**

(87) Numéro de publication internationale:
**WO 2017/071946 (04.05.2017 Gazette 2017/18)**

(54) **PROCÉDÉ DE PRÉDICTION D'UNE CARACTÉRISTIQUE RÉSULTANTE DE LA HOULE SUR UN SYSTÈME FLOTTANT POUR AU MOINS DEUX PAS DE TEMPS FUTURS**

VERFAHREN ZUR VORHERSAGE EINES MERKMALES AUS DEM WELLENGANG AUF EINEM SCHWIMMENDEN SYSTEM FÜR MINDESTENS ZWEI ZUKÜNFTIGE SCHRITTE

METHOD FOR PREDICTING A CHARACTERISTIC RESULTING FROM THE SWELL ON A FLOATING SYSTEM FOR AT LEAST TWO FUTURE TIME STEPS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.10.2015 FR 1560260**

(43) Date de publication de la demande:
**05.09.2018 Bulletin 2018/36**

(73) Titulaire: **IFP Energies nouvelles**
**92500 Rueil-Malmaison (FR)**

(72) Inventeurs:
• **NGUYEN, Hoai-Nam**
**69008 Lyon (FR)**
• **TONA, Paolino**
**69007 Lyon (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
• **FRANCESCO FUSCO ET AL: "Short-term wave forecasting with AR models in real-time optimal control of wave energy converters", INDUSTRIAL ELECTRONICS (ISIE), 2010 IEEE INTERNATIONAL SYMPOSIUM ON, IEEE, PISCATAWAY, NJ, USA, 4 juillet 2010 (2010-07-04), pages 2475-2480, XP031803316, ISBN: 978-1-4244-6390-9**
• **M. ARNOLD ET AL: "Adaptive AR modeling of nonstationary time series by means of Kalman filtering", IEEE TRANSACTIONS ON BIOMEDICAL ENGINEERING., vol. 45, no. 5, mai 1998 (1998-05), pages 553-562, XP055289689, PISCATAWAY, NJ, USA. ISSN: 0018-9294, DOI: 10.1109/10.668741**
• **FRANCESCO FUSCO ET AL: "Short-Term Wave Forecasting for Real-Time Control of Wave Energy Converters", IEEE TRANSACTIONS ON SUSTAINABLE ENERGY, IEEE, USA, vol. 1, no. 2, juillet 2010 (2010-07), pages 99-106, XP011328229, ISSN: 1949-3029, DOI: 10.1109/TSTE.2010.2047414 cité dans la demande**

- **RINGWOOD JOHN V ET AL: "Energy-Maximizing Control of Wave-Energy Converters: The Development of Control System Technology to Optimize Their Operation", IEEE CONTROL SYSTEMS, IEEE, USA, vol. 34, no. 5, octobre 2014 (2014-10), pages 30-55, XP011558952, ISSN: 1066-033X, DOI: 10.1109/MCS.2014.2333253 [extrait le 2014-09-12]**
- **F. SAUPE ET AL: "Latching Control Strategies for a Heaving Buoy Wave Energy Generator in a Random Sea", PROCEEDINGS OF THE 17TH WORLD CONGRESS THE INTERNATIONAL FEDERATION OF AUTOMATIC CONTROL; SEOUL, KOREA; JULY 6-11, 2008., vol. 47, no. 3, 31 décembre 2014 (2014-12-31), pages 7710-7716, XP055290674, Red Hook, NY ISSN: 1474-6670, DOI: 10.3182/20140824-6-ZA-1003.00440 ISBN: 978-1-123-47890-7**
- **D.S. SHOOK ET AL: "Identification for long-range predictive control", IEE PROCEEDINGS D. CONTROL THEORY & APPLICATIONS., vol. 138, no. 1, 1991, page 75, XP055289611, GB ISSN: 0143-7054, DOI: 10.1049/ip-d.1991.0010 cité dans la demande**
- **Francesco Fusco: "Real-time Forecasting and Control for Oscillating Wave Energy Devices", PhD Thesis, 1 July 2012 (2012-07-01), pages 1-282, XP055289618, Retrieved from the Internet: URL:http://eprints.maynoothuniversity.ie/4 011/1/Fusco2012_PhDthesis.pdf [retrieved on 2016-07-19]**
- **D.S. Shook ET AL: "Identification for long-range predictive control", IEE PROCEEDINGS D. CONTROL THEORY & APPLICATIONS., vol. 138, no. 1, 1 January 1991 (1991-01-01), page 75, XP055289611, GB ISSN: 0143-7054, DOI: 10.1049/ip-d.1991.0010**
- **SCHOEN M P ET AL: "Wave prediction and fuzzy logic control of wave energy converters in irregular waves", CONTROL AND AUTOMATION, 2008 16TH MEDITERRANEAN CONFERENCE ON, IEEE, PISCATAWAY, NJ, USA, 25 June 2008 (2008-06-25), pages 767-772, XP031308484, ISBN: 978-1-4244-2504-4**
- **GORDON REIKARD ET AL: "Forecasting ocean waves: Comparing a physics-based model with statistical models", COASTAL ENGINEERING, ELSEVIER, AMSTERDAM, NL, vol. 58, no. 5, 20 December 2010 (2010-12-20), pages 409-416, XP028148673, ISSN: 0378-3839, DOI: 10.1016/J.COASTALENG.2010.12.001 [retrieved on 2010-12-24]**

**Description**

La présente invention concerne le domaine de la prédiction de la houle, en particulier pour la commande d'un système houlomoteur.

Les ressources énergétiques renouvelables connaissent un fort intérêt depuis quelques années. Ces ressources sont propres, gratuites et inépuisables, autant d'atouts majeurs dans un monde rattrapé par la diminution inexorable des ressources fossiles disponibles et prenant conscience de la nécessité de préserver la planète. Parmi ces ressources, l'énergie houlomotrice, source relativement méconnue au milieu de celles largement médiatisées comme l'éolien ou le solaire, contribue à la diversification indispensable de l'exploitation des énergies renouvelables. Les dispositifs, couramment appelés appareils "houlomoteurs", sont particulièrement intéressants, car ils permettent de produire de l'électricité à partir de cette source d'énergie renouvelable (l'énergie potentielle et cinétique des vagues) sans émission de gaz à effet de serre. Ils sont particulièrement bien adaptés pour fournir de l'électricité à des sites insulaires isolés.

Par exemple, les demandes de brevet FR 2876751, FR 2973448 et WO 2009/081042 décrivent des appareils pour capter l'énergie produite par le flot marin. Ces dispositifs sont composés d'un support flottant sur lequel est disposé un pendule monté mobile par rapport au support flottant. Le mouvement relatif du pendule par rapport au support flottant est utilisé pour produire de l'énergie électrique au moyen d'une machine de conversion de l'énergie (par exemple une machine électrique). La machine de conversion fonctionne en tant que générateur et en tant que moteur. En effet, pour fournir un couple ou une force qui entraîne le mobile, on fournit une puissance à la machine de conversion afin de mettre le mobile en résonance avec les vagues (mode moteur). Par contre, pour produire un couple ou force qui résiste au mouvement du mobile, on récupère une puissance via la machine de conversion (mode générateur).

Dans l'intention d'améliorer le rendement et donc la rentabilité des dispositifs pour convertir l'énergie des vagues en énergie électrique (systèmes houlomoteurs), il est intéressant de prédire le comportement de la houle, notamment la force exercée sur le système houlomoteur ou son élévation par rapport au système houlomoteur.

Dans d'autres domaines relatifs aux systèmes flottants (plateforme flottante, éolienne flottante...), il est également intéressant de prédire le comportement de la houle pour la commande et la stabilité de ces systèmes flottants.

Un certain nombre d'algorithmes, permettant la prédiction à court terme de la force ou de l'élévation de la houle à partir de séries temporelles de mesures passées, ont été proposés dans la littérature. Parmi ceux-ci, on connaît l'approche de décomposition harmonique (implémentée par filtre de Kalman ou moindres carrés récursifs), l'approche d'extrapolation sinusoïdale (implémentée par filtre de Kalman étendu) et l'approche par modèle autorégressif (AR) avec minimisation, sur un seul pas de temps, de l'erreur de prédiction (avec solution obtenue analytiquement) ou sur plusieurs pas de temps (on parle dans ce cas d'identification prédictive à longue portée, « long range prédictive identification », ou LRPI, en anglais). De telles approches sont décrites dans les documents suivants :

- Francesco Fusco and John V Ringwood. "Short-term wave forecasting for real-time control of wave energy converters". In: Sustainable Energy, IEEE Transactions on 1.2 (2010), pp. 99-106
- DS Shook, C Mohtadi, and SL Shah. "Identification for long-range prédictive control". In: IEE Proceedings D (Control Theory and Applications). Vol. 138. 1. IET. 1991, pp. 75-84.

En outre, on connaît du document suivant :

- B Fischer, P Kracht, and S Perez-Becker. "Online-algorithm using adaptive filters for short-term wave prédiction and its implementation". In: Proceedings of the 4th International Conférence on Ocean Energy (ICOE), Dublin, Ireland. 2012, pp. 17-19 plusieurs variantes de prédicteurs basés sur des modèles autorégressifs AR, et plus particulièrement un banc de filtres constitué de plusieurs prédicteurs, basés sur des modèles AR, dont les coefficients sont adaptés par un algorithme des moindres carrés récursifs.

Aucune des méthodes proposées jusqu'à maintenant ne permet de générer une prédiction correcte en s'adaptant automatiquement et en continu aux changements (relativement lents) d'état de mer. En outre, la méthode LRPI est complexe à mettre en oeuvre, car elle repose sur un calcul très lourd des coefficients du modèle autorégressif, ce qui rend difficile l'implémentation en temps réel.

De plus, certaines approches LRPI multi-modèles (MM-LRPI) proposent de prendre en compte la variabilité de l'état de mer. L'approche MM-LRPI est proposée notamment dans le document B. Fischer et al., à la fois dans une variante « estimation continue » où les coefficients sont estimés via un algorithme des moindres carrés récursifs, et dans une variante « estimation à intervalles réguliers » où les coefficients sont estimés en appliquant un algorithme des moindres carrés à des lots des données. Il est important de souligner que, dans les deux cas, l'application d'un simple algorithme des moindres carrés permet une prédiction qui se dégrade de plus en plus au fur et à mesure que l'horizon de prédiction augmente.

En contraste, la méthode LRPI, décrite dans F. Fusco et al. et dans DS Shook et al. est basée sur une chaîne de prédiction indirecte qui utilise un algorithme des moindres carrés non linéaires à exécuter à intervalles réguliers, et est capable de suivre l'évolution de l'état de mer, bien que de manière discontinue. Toutefois, cette méthode LRPI présente de nombreux inconvénients :

- La complexité, la durée et le coût des calculs (problème des moindres carrés non linéaires, sans solution analytique, qui demande l'utilisation d'algorithmes avec des temps de calcul importants à exécuter sur des gros lots de données),
- La ré-identification des paramètres à intervalles réguliers (hors ligne), pour suivre l'évolution de l'état de mer, qui nécessite une couche de supervision,
- La nécessité d'un filtrage passe bas des données pour obtenir de bons résultats (lorsque ce filtrage est appliqué en ligne, le déphasage qu'il comporte dégrade les résultats), et
- La dépendance de la qualité de la prédiction du bon choix de la période d'échantillonnage, qui en général change en passant d'un lot de données au suivant, pour prendre en compte les caractéristiques de l'état de mer courant.

Les documents suivants décrivent d'autres méthodes :

- Francesco Fusco : « Real-Time forecasting and control for oscillating wave energy devices", phD Thesis, 1 juillet 2012, pages 1 - 282, XP055289618
- Gordon Reikard et al.: "forecasting ocean waves: comparing a physics-based model with statistical models", Coastal engineering, Elservier, Amsterdam, NL, vol. 58, no. 5, 20 décembre 2010, pages 409 - 416, XP028148673,
- Schoen MP et al.: " Wave prédiction and fuzzy logic control of wave energy converters in irregulars waves", Control and automation, 2008, 16th Mediterranean conférence on, IEEE, Piscataway, NJ, USA, 25 juin 2008, pages 767-772, XP031308484.

Pour pallier ces inconvénients, la présente invention concerne un procédé permettant la prédiction de la houle (force, élévation ...) à court terme, à partir d'une série temporelle de mesures passées de la houle. Le procédé de prédiction selon l'invention est basé sur l'estimation des coefficients variables d'un modèle autorégressif en permettant une minimisation multi pas (c'est-à-dire sur un horizon de plusieurs pas de temps dans le futur) de l'erreur de prédiction. Ainsi, le procédé de prédiction selon l'invention permet une prédiction plus flexible et moins coûteuse en termes de calculs et d'utilisation de la mémoire du calculateur par rapport aux méthodes de l'art antérieur, notamment la méthode LRPI. De plus, la variabilité des coefficients permet de prendre en compte les changements de l'état de la mer.

**Le procédé selon l'invention**

L'invention concerne un procédé selon la revendication 1 de prédiction d'une caractéristique résultante de la houle sur un système flottant soumis au mouvement de la houle. Les modes de réalisation préférés sont définit par l'objet des revendications dépendantes.

**Description détaillée de l'invention**

La présente invention concerne un procédé de prédiction d'une caractéristique résultant de la houle sur un système flottant soumis au mouvement de la houle. La caractéristique prédite peut être notamment la force exercée par la houle sur le système flottant, l'élévation de la houle par rapport au système flottant, ou toute caractéristique analogue... Le système flottant peut être un système houlomoteur (sous toutes les formes envisageables), une plate-forme flottante (par exemple une plateforme utilisée dans l'industrie pétrolière), ou une éolienne flottante (« offshore ») ou tout système flottant analogue. Dans la suite de la description, le procédé de prédiction est décrit, de manière non limitative, pour un système houlomoteur. Le système houlomoteur convertit l'énergie de la houle en énergie électrique, pneumatique ou hydraulique. Selon une conception, le système houlomoteur peut comprendre un moyen mobile connecté à une machine électrique, pneumatique ou hydraulique, pour la récupération d'énergie et pour la commande du système houlomoteur. Toutefois, tous les modes de réalisation décrits sont adaptés à tous les systèmes flottants ou oscillants.

Notations

Au cours de la description, les notations suivantes sont utilisées :

- $t_0$ : temps présent
- $T_s$ : période d'acquisition des données
- $M$ : ordre de l'horizon sur lequel on réalise la prédiction

- k : pas de temps discrétisé auquel est effectuée la dernière mesure (correspond à $t_0$)
- y : caractéristique de la houle, avec :

  • $\hat{y}$ : caractéristique prédite de la houle

- $x_{AR}$ : vecteur des caractéristiques antérieures avec

$$\mathbf{x}_{AR}(k-1) = [y(k-1) \ y(k-2) \ ... \ y(k-p)]^T$$

- $\mathbf{a}(k)$ : vecteur des coefficients variables dans le temps du modèle autorégressif de la houle avec

$$\mathbf{a}(k) = \big[a_1(k) \ a_2(k) \ ... \ a_p(k)\big]^T$$

- $w(k)$ : incertitudes stochastiques du modèle de la houle
- $\eta(k)$ : incertitudes stochastiques du modèle de marche aléatoire

Dans la suite de la description, on utilise la notation suivante pour représenter les pas de temps discrets :

| Temps discrets | Temps réels | |
|---|---|---|
| $k - p - M$ | $t_0 - (p + M)T_s$ | |
| $k - p$ | $t_0 - pT_s$ | |
| ... | ... | Passé |
| $k - 2$ | $t_0 - 2T_s$ | |
| $k - 1$ | $t_0 - T_s$ | |
| $k$ | $t_0$ | Présent |
| $k + 1$ | $t_0 + T_s$ | |
| $k + 2$ | $t_0 + 2T_s$ | |
| ... | ... | Futur |
| $k + h$ | $t_0 + hT_s$ | |
| $k + M$ | $t_0 + MT_s$ | |

où p est l'ordre des modèles autorégressifs, et M l'horizon futur, sur lequel la caractéristique de la houle est prédite.
Dans la suite de la description et pour les revendications, les termes vagues, flots marins, et houle sont considérées comme équivalents.
Le procédé de prédiction selon l'invention comporte les étapes suivantes :

1) Mesure de la caractéristique pour au moins un pas de temps passé,
2) Prédiction de la caractéristique pour plusieurs pas de temps futurs, avec :

a) construction d'un modèle autorégressif,
b) détermination des coefficients variables, et
c) prédiction de la caractéristique, et éventuellement
d) correction de ladite caractéristique prédite (étape facultative).

1) Mesure de la caractéristique pour au moins un pas de temps passé

Lors de cette étape, on mesure puis on stocke un certain nombre de valeurs passées de la caractéristique de la houle $y(t)$, mesurées ou estimées, pour $t = 0, T_s, 2T_s, 3T_s, ..., t_0$, où $t_0$ est le pas de temps présent et $T_s$ est la période d'acquisition des données. Les différents calculs peuvent être réalisés par ordinateur, ou plus génériquement, par un calculateur (donc ordinateur, ECU, etc.). Les valeurs peuvent être stockées dans la mémoire du calculateur. Le calculateur peut être embarqué dans le système houlomoteur, ou déporté. Le cas d'un calculateur embarqué permet d'appliquer le procédé de commande de manière embarquée. Dans ce dernier cas, les valeurs mesurées ou estimées localement doivent être transmises au calculateur déporté.

Cette étape a pour but de fournir à l'étape suivante p valeurs passées de *y* (y compris la valeur courante) : *y*(k), *y*(k - 1), *y*(k - 2),...,*y*(k - p + 1).

La mesure de la caractéristique peut consister en une mesure de la force de la houle exercée sur le support flottant, par exemple la force de la houle exercée sur un moyen mobile d'un système houlomoteur. Cette mesure peut être réalisée au moyen d'un capteur logiciel ou estimateur qui calcule cette force (dite force d'excitation) à partir des mesures disponibles : par exemple pressions, forces exercées sur le mécanisme de prise de puissance (PTO), position, vitesse et accélération du flotteur. Par exemple, le capteur logiciel peut fournir une estimation basée sur un champ de pressions mesurés par des capteurs distribués sur la surface du flotteur.

Selon une alternative de réalisation, la mesure de la caractéristique peut consister en une mesure de l'élévation de la houle par rapport au support flottant, par exemple la hauteur de la houle par rapport à un moyen mobile d'un système houlomoteur. De préférence, on peut mesurer l'élévation du la houle au centre de gravité du flotteur. Cette mesure peut être extrapolée, par exemple à partir de mesures d'élévation effectuées autour du flotteur (en particulier au moyen d'un capteur logiciel). Ces mesures peuvent se faire au moyen de vélocimètres ou accéléromètres à effet Doppler ou de bouées instrumentées

2) Prédiction de la caractéristique pour des pas de temps futurs

Lors de cette étape, on prédit la caractéristique pour plusieurs pas de temps futurs, en fonction des mesures réalisées lors de l'étape précédente. Cette prédiction est mise en oeuvre au moyen d'un modèle autorégressif de la houle.

*a) construction d'un modèle autorégressif de la houle*

Lors de cette étape, on construit au moins un modèle autorégressif de la houle. On appelle modèle autorégressif de la houle, un modèle représentatif de la houle, qui relie la caractéristique, pour au moins un pas de temps futur, auxdites caractéristiques des pas de temps passés (caractéristiques mesurées), au moyen de coefficients variables dans le temps. Le modèle est dit autorégressif car il prend en compte les valeurs passées de la caractéristique. Les coefficients du modèle sont variables dans le temps pour prendre en compte l'évolution de l'état de la mer.

On peut décrire l'évolution de la caractéristique de la houle à travers un modèle autoregressif (AR) à coefficients variables dans le temps par une formule du type :

$$y(k) = a_1(k)y(k-1) + a_2(k)y(k-2) + \cdots + a_p(k)y(k-p) + w(k)$$

où *w*(k) est une incertitude stochastique, imprédictible, de type bruit blanc avec moyenne nulle. Le modèle autorégressif de la houle peut donc comporter autant de coefficients variables que de pas de temps, pour lesquels la caractéristique a été mesurée et stockée. En forme compacte, l'équation ci-dessus peut s'écrire :

$$y(k) = \mathbf{x}_{AR}(k-1)^T \mathbf{a}(k) + w(k)$$

avec

$$\mathbf{x}_{AR}(k-1) = [y(k-1)\ y(k-2)\ ...\ y(k-p)]^T$$

$$\mathbf{a}(k) = \begin{bmatrix} a_1(k)\ a_2(k)\ ...\ a_p(k) \end{bmatrix}^T$$

Selon un mode de réalisation de l'invention, on construit un seul modèle autorégressif de la houle pour déterminer la caractéristique à tous les pas de temps futurs.

Alternativement, on construit plusieurs modèles autorégressifs de la houle, un pour chaque pas de temps futur. Chaque modèle peut alors être utilisé pour déterminer la caractéristique pour un seul pas de temps.

*b) détermination des coefficients variables*

Lors de cette étape, on détermine les coefficients variables dans le temps du modèle autorégressif de la houle. Selon l'invention, les coefficients sont déterminés au moyen d'un modèle de marche aléatoire.

Selon un mode de réalisation de l'invention, la nature variant dans le temps de l'état de mer est prise en compte en prenant les *p* coefficients du modèle autorégressif, variables et non plus fixes. Puisque l'état de mer varie, mais varie peu, on peut considérer que chaque coefficient du modèle autorégressif évolue de la manière suivante :

$$a_j(k+1) = a_j(k) + \eta_j(k)$$

où, $\eta_j(k)$ est une incertitude stochastique, de type bruit blanc à moyenne nulle, qui est utilisée pour décrire la variation du coefficient $a_j(k)$.

Ceci correspond à un modèle de type « marche aléatoire » (« *random walk* » en anglais), sous forme vectorielle ou scalaire selon le mode de réalisation.. Ce modèle de type « marche aléatoire » permet une adaptation automatique et continue du modèle autorégressif de la houle.

Selon un mode de réalisation de l'invention, on détermine les coefficients variables au moyen d'un filtre de Kalman, par exemple au moyen un filtre de Kalman étendu ou d'un banc de filtres de Kalman linéaires.

Cette étape permet de déterminer les coefficients variables qui minimisent l'erreur entre la prédiction et la valeur réelle (qui va se produire).

*c) détermination de la caractéristique*

Pour plusieurs pas de temps futurs, on prédit la caractéristique au moyen du modèle autorégressif de la houle, des coefficients déterminés à l'étape précédente, et des mesures réalisées pour les pas de temps passés. Pour cela, on applique le modèle autorégressif de la houle (avec les coefficients déterminés) aux caractéristiques mesurées. Ainsi, le procédé de prédiction selon l'invention est un procédé multi-pas, qui permet de prédire la houle à court terme.

Selon le mode de réalisation, pour lequel seul un modèle autorégressif de la houle est construit, le modèle est utilisé pour déterminer la caractéristique de la houle pour plusieurs pas de temps.

Selon l'alternative, pour laquelle un modèle autorégressif de la houle est construit pour chaque pas de temps, chaque modèle est utilisé pour déterminer la caractéristique de la houle pour un seul pas de temps.

*d) Correction de la caractéristique prédite*

Cette étape est facultative, elle peut être mise en oeuvre pour minimiser l'erreur de prédiction.

Cette étape consiste à appliquer une étape supplémentaire de correction, aux prédictions de la caractéristique de la houle générées de manière itérative pour chaque pas de temps futur en utilisant un seul modèle autorégressif à coefficients variables. L'étape de correction permet de réduire l'accumulation de l'erreur inhérente au calcul itératif de la prédiction sur plusieurs pas futurs en utilisant un seul modèle autorégressif et, plus généralement, permet d'obtenir une prédiction de meilleure qualité en décorrélant l'erreur de prédiction courant des mesures passées (« blanchissement » de l'erreur de prédiction).

Cette étape de correction peut être appliquée directement aux prédictions issues d'un modèle autorégressif dont les coefficients variables sont sur estimés par le filtre de Kalman étendu, en en améliorant la qualité. Mais elle peut être appliquée également aux prédictions issues d'un modèle autorégressif, dont les coefficients variables sont estimés par un filtre de Kalman linéaire, qui, seul, n'a pas la capacité de minimiser l'erreur de prédiction sur plusieurs pas.

En outre, l'invention concerne un procédé de commande d'un système houlomoteur, qui convertit l'énergie des vagues en énergie électrique, pneumatique ou hydraulique. Le procédé de commande comprend une étape de prédiction de la houle selon l'une des caractéristiques précédentes, avec les étapes suivantes :

1) Mesure de la caractéristique pour au moins un pas de temps passé,
2) Prédiction de la caractéristique pour des pas de temps futurs :

    a) construction d'un modèle autorégressif,
    b) détermination des coefficients variables,
    c) prédiction de la caractéristique, et éventuellement,
    d) correction de la caractéristique prédite.

Le procédé de commande selon l'invention comprend également une étape de commande du système houlomoteur en fonction de la caractéristique (force, élévation ...) de la houle, de manière à optimiser la récupération d'énergie. La commande peut consister en un contrôle du moyen mobile du système houlomoteur, par exemple au moyen d'une machine électrique, pneumatique ou hydraulique, nommé système PTO (de l'anglais « power take-off »). Ce système PTO influence le mouvement du moyen mobile et permet de transférer l'énergie mécanique au réseau électrique, pneumatique ou hydraulique. La commande prédictive par modèle (MPC) est un exemple de méthode de commande de systèmes houlomoteurs nécessitant une prédiction à court terme de la vague réalisée en temps réel. Le procédé de commande selon l'invention peut être également appliqué un système houlomoteur appartenant à la catégorie de systèmes houlomoteurs avec colonnes d'eau oscillantes (OWC de l'anglais Oscillating Water Column).

Le procédé de commande peut comprendre en outre une étape facultative de correction de la caractéristique prédite. Cette correction peut être mise en oeuvre au moyen d'un filtre de Kalman.

En effet, le procédé de commande selon l'invention permet une commande optimale, car le procédé de prédiction selon l'invention propose une méthode pour prédire la force, ou l'élévation, que la houle exercera sur le moyen mobile sur un court horizon futur (quelques secondes) à partir d'une série temporelle de valeurs mesurées (ou estimées) de cette caractéristique dans le passé.

Variantes de réalisation

*1) Premier mode de réalisation*

Selon un premier mode de réalisation de l'invention, on construit un seul modèle autorégressif de la houle. Pour ce mode de réalisation, on peut déterminer les coefficients variables du modèle autorégressif au moyen d'un filtre de Kalman étendu. En outre, on peut déterminer la caractéristique pour plusieurs (N, avec $N \geq 2$) pas de temps futurs en mettant en oeuvre les étapes suivantes :

(1) on considère le pas de temps k ;
(2) on construit le vecteur $\mathbf{x}_{AR}(k - 1)^T$ des caractéristiques antérieures à l'instant p ;
(3) on détermine ladite caractéristique $\hat{y}(k + 1|k)$ pour le pas temps k+1 au moyen dudit vecteur $\mathbf{x}_{AR}(k - 1)^T$ et dudit vecteur $\mathbf{a}(k)$ desdits coefficients variables dans le temps ; et
(4) on réitère les étapes (2) et (3) pour les N pas de temps futurs en incrémentant le pas de temps.

Ainsi, le procédé de prédiction selon ce premier mode de réalisation peut comprendre les étapes suivantes :

a) on mesure la caractéristique pour au moins un pas de temps ;
b) on prédit la caractéristique pour au moins deux pas de temps futurs en mettant en oeuvre les étapes suivantes :

i) on construit un modèle autorégressif de la houle, le modèle autorégressif de la houle reliant la caractéristique d'un pas de temps futur aux caractéristiques mesurées au moyen de coefficients variables dans le temps ;
ii) on détermine les coefficients variables dans le temps au moyen d'un modèle de marche aléatoire et au moyen d'un filtre de Kalman étendu ; et
iii) on détermine la caractéristique pour les pas de temps futurs au moyen du modèle autorégressif de la houle, des coefficients variables dans le temps déterminés et des mesures de la caractéristique, la détermination étant mise en oeuvre pour N pas de temps futurs au moyen des étapes suivantes :

(1) on considère le pas de temps k ;
(2) on construit le vecteur $\mathbf{x}_{AR}(k - 1)^T$ des caractéristiques antérieures à l'instant p ;
(3) on détermine la caractéristique $\hat{y}(k + 1|k)$ pour le pas temps p+1 au moyen du vecteur $\mathbf{x}_{AR}(k - 1)^T$ et du vecteur $\mathbf{a}(k)$ des coefficients variables dans le temps ; et
(4) on réitère les étapes (2) et (3) pour les N pas de temps futurs, en incrémentant le pas de temps.

Le procédé de commande selon le premier mode de réalisation permet de gagner du temps de calcul par rapport aux algorithmes qui estiment la force de la houle à partir de lots de données, spécialement dans le cas d'horizons de prédiction grands.

Ce premier mode de réalisation est détaillé ci-dessous, de manière non limitative. L'étape de mesure n'est pas décrite car elle ne comporte pas de spécificité pour ce mode de réalisation.

Pour ce premier mode de réalisation, on décrit l'évolution de la force de la houle à travers un modèle autorégressif (AR) à coefficients variables dans le temps :

$$y(k) = a_1(k)y(k-1) + a_2(k)y(k-2) + \cdots + a_p(k)y(k-p) + w(k)$$

où $w(k)$ est une incertitude stochastique, imprédictible, de type bruit blanc avec moyenne nulle. En forme compacte, l'équation ci-dessous s'écrit :

$$y(k) = \mathbf{x}_{AR}(k-1)^T \mathbf{a}(k) + w(k)$$

avec

$$\mathbf{x}_{AR}(k-1) = [y(k-1)\ y(k-2)\ \dots\ y(k-p)]^T$$

$$\mathbf{a}(k) = \begin{bmatrix} a_1(k)\ a_2(k)\ \dots\ a_p(k) \end{bmatrix}^T$$

La meilleure prédiction de la force de la houle au pas $k$ en utilisant les mesures jusqu'au pas $k$-$1$, que l'on note $\hat{y}(k|k$ - $1)$, s'obtient en éliminant ce qui n'est pas prédictible (l'incertitude qui, en moyenne, vaut zéro) :

$$\hat{y}(k|k-1) = \mathbf{x}_{AR}(k-1)^T \mathbf{a}(k)$$

On détermine, à chaque instant, l'ensemble des paramètres $\mathbf{a}$ du modèle autorégressif de la houle minimisant les erreurs de prédictions commises dans le futur. L'erreur de prédiction pour un pas donné dans le futur peut être définie comme la différence entre la mesure future (en avant) à ce pas de temps et la prédiction du procédé selon l'invention à ce pas de temps :

$$\epsilon(k+1|k) = y(k+1) - \hat{y}(k+1|k) \qquad \text{erreur de prédiction à 1 pas en avant}$$

$$\epsilon(k+2|k) = y(k+2) - \hat{y}(k+2|k) \qquad \text{erreur de prédiction à 2 pas en avant}$$

$$\dots \qquad\qquad \dots$$

$$\epsilon(k+M|k) = y(k+M) - \hat{y}(k+M|k) \qquad \text{erreur de prédiction à } M \text{ pas en avant}$$

Par rapport aux méthodes connues dans la littérature, le procédé selon l'invention ne cherche pas à minimiser seulement l'erreur de prédiction à seul pas de temps futur (en avant), comme il suit :

$$\min_{a_1, a_2, \dots, a_p} \sum_{l=p+1}^{k} (y(l) - \hat{y}(l|l-1))^2$$

mais plutôt la somme des carrés des erreurs de prédictions sur plusieurs pas sur un horizon $M$ :

$$\min_{a_1, a_2, \dots, a_p} \sum_{l=p+M+1}^{k} \sum_{j=1}^{M} (y(l) - \hat{y}(l|l-j))^2$$

En considérant les coefficients $\mathbf{a}$ du modèle autorégressif constants, la solution du premier problème de minimisation peut s'obtenir analytiquement à travers la méthode des moindres carrés. Le calcul de la solution est dans ce cas très simple, mais les résultats ne sont pas très bons pour la prédiction de la houle car l'état de mer évolue lentement et la minimisation sur un seul pas ne permet pas de prendre en compte cette variation.
Pour pallier ces inconvénients, on détermine, au moyen d'un modèle de marche aléatoire, les coefficients du modèle autorégressif de la houle. En effet, la nature variant dans le temps de l'état de mer est prise en compte en prenant les $p$ coefficients du modèle autorégressif de la houle, variables et non plus fixes. Puisque l'état de mer varie, mais varie peu, on peut considérer que chaque coefficient du modèle autorégressif de la houle évolue de la manière suivante :

$$a_j(k+1) = a_j(k) + \eta_j(k)$$

où, $\eta_j(k)$ est une incertitude stochastique, de type bruit blanc à moyenne nulle, qui est utilisée pour décrire la variation du coefficient $a_j(k)$. Pour décrire l'évolution de l'ensemble des coefficients on peut écrire, en forme vectorielle compacte :

$$\mathbf{a}(k+1) = \mathbf{a}(k) + \mathbf{\eta}(k)$$

avec

$$\begin{cases} \mathbf{a}(k) = \begin{bmatrix} a_1(k) & a_2(k) & \dots & a_p(k) \end{bmatrix}^T \\ \mathbf{\eta}(k) = \begin{bmatrix} \eta_1(k) & \eta_2(k) & \dots & \eta_p(k) \end{bmatrix}^T \end{cases}$$

ce qui correspond à un modèle de type « marche aléatoire » (« *random walk* » en anglais).

Pour ce premier mode de réalisation, l'estimation de ces coefficients variant dans le temps se fait en appliquant une procédure connue sous le nom de filtre de Kalman étendu (EKF, ou « extended Kalman filter » en anglais), qui est une approche standard dans la théorie de l'estimation d'état non linéaire.

Cette procédure permet de traiter la non linéarité du problème de minimisation multi-pas de l'erreur de prédiction. Étant récursive, elle demande peu de ressources en calcul et en stockage de données.

Au temps *k*, on peut considérer les erreurs de prédictions à 1, 2, ..., *M* pas de temps en avant :

- Pour l'erreur à 1 pas en avant, qu'on souhaite réduire le plus possible, on peut écrire les relations suivantes :

$$\epsilon_1(k) = y(k) - \hat{y}(k|k-1)$$

où

$$\hat{y}(k|k-1) = \mathbf{x}_{AR}(k-1)^T \mathbf{a}(k)$$

- Pour l'erreur à 2 pas en avant, qu'on souhaite réduire le plus possible, on peut écrire les relations suivantes :

$$\epsilon_2(k) = y(k) - \hat{y}(k|k-2)$$

où $\hat{y}(k|k\text{ - }2)$ est la prédiction au temps k en utilisant les mesures $y(k\text{ - }2), y(k\text{ - }3)$, ..., qui peut être calculé itérativement via ÿ(k - 1|k - 2) comme il suit :

$$\hat{y}(k|k-2) = a_1(k)\hat{y}(k-1|k-2) + a_2(k)y(k-2) + \cdots + a_p(k)y(k-p)$$

avec

$$\hat{y}(k-1|k-2) = a_1(k)y(k-2) + a_2(k)y(k-3) + \cdots + a_p(k)y(k-p-1)$$

ce qui donne l'expression (non linéaire) suivante :

$$\hat{y}(k|k - 2) = \left(a_1(k)^2 + a_1(k)\right)y(k - 2)$$
$$+ \left(a_1(k)a_2(k) + a_3(k)\right)y(k - 3) + \ldots + a_1(k)a_p(k)y(k - p - 1)$$

- Pour l'erreur à M pas en avant, qu'on souhaite réduire le plus possible, on peut écrire les relations suivantes :

$$\epsilon_M(k) = y(k) - \hat{y}(k|k - M)$$

où $\hat{y}(k|k$ - $M)$ est la prédiction au temps $k$ en utilisant les mesures $y(k$ - $M),y(k$ - $M$ - 1), ..., qui peut être calculé itérativement de la même manière que $\hat{y}(k|k$ - 2) En combinant les expressions pour les erreurs de prédiction, on obtient le système d'équations :

$$\begin{cases} y(k) = \hat{y}(k|k - 1) + \epsilon_1(k) \\ y(k) = \hat{y}(k|k - 2) + \epsilon_2(k) \\ \vdots \\ y(k) = \hat{y}(k|k - M) + \epsilon_M(k) \end{cases}$$

qu'on peut considérer comme l'équation de sortie d'un système sous forme d'état auquel on applique la procédure EKF. Dans ce contexte, les résidus $\varepsilon_j(k)$ sont considérés comme du bruit, qui représente aussi la perturbation sur les mesures.

En combinant les équations précédentes, issues du calcul des erreurs de prédictions multi-pas, avec l'équation du modèle de marche aléatoire décrivant l'évolution des coefficients $a(k)$, on peut obtenir le système suivant, qui peut être considéré comme une représentation d'état globale du système :

$$\begin{cases} \mathbf{a}(k + 1) = \mathbf{a}(k) + \boldsymbol{\eta}(k) \\ \begin{bmatrix} y(k) \\ y(k) \\ y(k) \\ y(k) \end{bmatrix} = \begin{bmatrix} \hat{y}(k|k - 1) \\ \hat{y}(k|k - 2) \\ \vdots \\ \hat{y}(k|k - M) \end{bmatrix} + \boldsymbol{\epsilon}(k) \end{cases}$$

où

$$\boldsymbol{\epsilon}(k) = \begin{bmatrix} \epsilon_1(k) & \epsilon_2(k) & \ldots & \epsilon_M(k) \end{bmatrix}^T.$$

Ce système est sous la forme d'une représentation d'état classique. L'équation d'état est linéaire par rapport à l'état, en l'occurrence les coefficients $a_j$ du modèle autorégressif AR de la houle. Mais l'équation de sortie, à savoir l'ensemble des équations issues du calcul des erreurs de prédiction multi pas est non linéaire par rapport à ces mêmes coefficients $a_j$. L'état d'un système sous cette forme peut être estimé en utilisant une approche de type filtre de Kalman étendu.

La procédure EKF permet d'estimer des coefficients inconnus (ceux du modèle autorégressifs de la houle) d'un système, en minimisant les résidus. La modélisation est réalisée de manière à ce que ces résidus correspondent aux erreurs de prédictions à 1, 2, ..., $M$ pas de temps futurs (en avant), calculés au temps $k$. Ainsi la minimisation des résidus réalisée par la procédure EKF, permet de minimiser ces erreurs de prédiction.

Le procédé selon ce premier mode de réalisation consiste en une modélisation (mise en équations) permettant d'appliquer un filtre de Kalman étendu à un système non linéaire bruité, dont les paramètres inconnus sont les coefficients variables du modèle autorégressif qui représente l'évolution de la caractéristique (force, élévation ...) de la houle.

Le filtre de Kalman étendu est un algorithme récursif qui minimise la racine carrée de l'erreur d'estimation des paramètres d'un système non linéaire bruité. Pour le système défini ci-dessus, il fournit la solution du problème de minimisation suivant :

$$\min_{\mathbf{a}(k)} \left\{ \left(\mathbf{a}(0) - \mathbf{a}(0|0)\right)^T P_0^{-1}\left(\mathbf{a}(0) - \mathbf{a}(0|0)\right) + \sum_{l=1}^{k} \eta(l-1)^T Q^{-1}\eta(l-1) + \epsilon(l)^T R^{-1}\epsilon(l) \right\}$$

où $P_0$, $Q$ et $R$ sont des matrices réelles carrées de dimension $p \times p, p \times p, M \times M$ respectivement et $\mathbf{a}(0|0)$ la valeur moyenne de l'état initial $\mathbf{a}(0)$ inconnu.

À chaque instant k, l'algorithme EKF calcule la solution à ce problème en passant par deux étapes.

La première étape est la mise à jour temporelle des estimations :

$$\begin{cases} \mathbf{a}(k|k-1) = \mathbf{a}(k-1|k-1) \\ P(k|k-1) = P(k-1|k-1) + Q \end{cases}$$

où $\mathbf{a}(k|k$ - 1) et $P(k|k$ - 1) sont respectivement l'estimation des paramètres $\mathbf{a}(k)$ et leur matrice de covariance obtenues en utilisant les mesures à partir de l'instant $k$ - 1 et $\mathbf{a}(k$ - 1$|k$ - 1) et $P(k$ - 1$|k$ - 1) sont respectivement l'estimation des paramètres $\mathbf{a}(k$ - 1) et leur matrice de covariance obtenue en utilisant les mesures à partir de l'instant $k$ - 1.

La seconde étape est la mise à jour des mesures :

$$\begin{cases} K(k) = P(k|k-1)H(k)(H(k)^T P(k|k-1)H(k) + R)^{-1} \\ \mathbf{a}(k|k) = \mathbf{a}(k|k-1) + K(k)\left( \begin{bmatrix} y(k) \\ y(k) \\ \vdots \\ y(k) \end{bmatrix} - \begin{bmatrix} \hat{y}(k|k-1) \\ \hat{y}(k|k-2) \\ \vdots \\ \hat{y}(k|k-M) \end{bmatrix} \right) \\ P(k|k) = (I - K(k)H(k)P(k|k-1) \end{cases}$$

avec

$$H(k) = \frac{dh(k)}{d\mathbf{a}}\Big|_{\mathbf{a}=\mathbf{a}(k-1)}$$

où

$$h(k) = \begin{bmatrix} \hat{y}(k|k-1) \\ \hat{y}(k|k-2) \\ \vdots \\ \hat{y}(k|k-M) \end{bmatrix}$$

et $I$ est la matrice identité de dimensions appropriées.

Une fois le vecteur des paramètres optimaux $a(k|k)$ obtenu, il peut être utilisé pour prédire la caractéristique de la houle comme il suit, à chaque instant $k$ :

- on utilise les entrées : mesures de la houle $y(k), y(k$ - 1),..., paramètres estimés $\mathbf{a}(k|k)$, horizon de prédiction $M$
- pour calculer les sorties : estimations futures de la caractéristique de la houle $\hat{y}(k + 1|k), \hat{y}(k + 2|k),...,\hat{y}(k + M|k)$. Pour ce faire,

    i. on initialise $s = 1$ et $\mathbf{x} = [y(k)\ y(k$ - 1$)\ ...\ y(k$ - $p$ + 1$)]$

    ii. on calcule les prédictions $\hat{y}(k + s|k)$

$$\begin{cases} y_f = \mathbf{x}^T \mathbf{a}(k|k) \\ \hat{y}(k+s|k) = y_f \\ x = \left[ y_f\ x(1:p-1)^T \right]^T \\ s = s + 1 \end{cases}$$

iii. si $s \leq$ M, on réitère l'étape ii, sinon on arrête.

*2) Deuxième mode de réalisation*

Selon un deuxième mode de réalisation de l'invention, on construit plusieurs modèles autorégressifs de la houle : un pour chaque pas de temps futur. Pour ce mode de réalisation, on peut déterminer les coefficients variables du modèle autorégressif au moyen d'un banc de filtres de Kalman linéaires. On appelle banc de filtres, un ensemble de filtres.

Ainsi, le procédé de prédiction selon ce deuxième mode de réalisation peut comprendre les étapes suivantes :

a) on mesure la caractéristique pour au moins un pas de temps ;
b) on prédit la caractéristique pour au moins deux pas de temps futurs en mettant en oeuvre les étapes suivantes :

i) on construit plusieurs modèles autorégressifs de la houle : un pour chaque pas de temps k, chaque modèle autorégressif de la houle reliant la caractéristique d'un pas de temps futur aux caractéristiques mesurées au moyen de coefficients variables dans le temps ;
ii) on détermine les coefficients variables dans le temps de chaque modèle autorégressif de la houle, au moyen d'un modèle de marche aléatoire et au moyen d'un banc de filtres de Kalman adaptatifs ; et
iii) on détermine la caractéristique pour les pas de temps futurs au moyen des modèles autorégressifs de la houle, des coefficients variables dans le temps déterminés et des mesures de ladite caractéristique, la détermination étant mise en oeuvre pour chaque pas de temps au moyen du modèle autorégressif du pas de temps concerné et des coefficients variables du pas de temps concerné.

Pour ce mode de réalisation, la prédiction pour les différents pas de temps peut être réalisée séquentiellement ou parallèlement.

Le procédé de commande selon le deuxième mode de réalisation permet une prédiction sur plusieurs pas de temps sans dépendance entre les prédictions des pas de temps précédents.

Ce deuxième mode de réalisation est détaillé ci-dessous, de manière non limitative. L'étape de mesure n'est pas décrite car elle ne comporte pas de spécificité pour ce mode de réalisation.

Pour ce deuxième mode de réalisation, on suppose que la caractéristique (force, élévation...) de la houle au pas $h$ futur $y(k + h)$ est une combinaison linéaire, à coefficients variant dans le temps, des mesures présente et passées $y(k), y(k - 1), \ldots, y(k - p + 1)$ :

$$y(k + h) = a_{1,h}(k)y(k - 1) + a_{2,h}(k)y(k - 2) + \cdots + a_{p,h}(k)y(k - p + 1) + w_h(k + h)$$

où $w_h(k + h)$ est une incertitude stochastique, imprédictible, de type bruit blanc avec moyenne nulle. En forme compacte, cela donne :

$$y(k + h) = \sum_{j=1}^{p} a_{j,h}(k)y(k - j + 1) + w_h(k + h)$$

Il s'agit d'une forme particulière de modèle autorégressif (AR), où les $h$ - 1 premiers coefficients sont nuls.

Pour chaque pas de temps $h$ = 1, 2, ..., $M$, on construit donc un modèle qui permet de prédire la valeur future de la houle au pas de temps $h$. Au pas $h$, la meilleure prédiction possible, issue du modèle autorégressif correspondant, en présence de l'incertitude $w_h(k + h)$ est donnée par :

$$\hat{y}(k + h|k) = \sum_{j=1}^{p} a_{j,h}(k)y(k - j + 1)$$

On dispose de $h$ modèles autorégressifs AR différents, un pour chaque pas futur de prédiction, il est donc possible de minimiser chaque erreur de prédiction indépendamment :

$$\epsilon(k + 1|k) = y(k + 1) - \hat{y}(k + 1|k) \qquad \text{erreur de prédiction à 1 pas en avant}$$

$$\epsilon(k + 2|k) = y(k + 2) - \hat{y}(k + 2|k) \qquad \text{erreur de prédiction à 2 pas en avant}$$

$$\ldots \qquad\qquad\qquad \ldots$$

$$\epsilon(k + h|k) = y(k + h) - \hat{y}(k + h|k) \qquad \text{erreur de prédiction à } h \text{ pas en avant}$$

$$\ldots \qquad\qquad\qquad \ldots$$

$$\epsilon(k + M|k) = y(k + M) - \hat{y}(k + M|k) \quad \text{erreur de prédiction à } M \text{ pas en avant}$$

en résolvant :

$$\min_{\mathbf{a}_h} \sum_{l=p+h}^{k} (y(l) - \hat{y}(l|l - h))^2$$

pour chaque modèle séparément.

On a donc un ensemble (banc) de prédicteurs et chacun des prédicteurs est dédié à la prédiction à un instant futur différent, en utilisant seulement les mesures jusqu'à l'instant de temps actuel. On parle dans ce cas de « prédicteur multi-pas directs » par opposition aux prédicteurs multi-pas « plug-in » (ou « indirects ») qui consistent en un enchainement de prédicteurs à un seul pas en avant où la prédiction pour le pas de temps $h$ est traitée comme une mesure pour la prédiction pour le pas $h$ + **1Erreur ! Source du renvoi introuvable..** Les prédicteurs multi-pas plug-in souffrent potentiellement de problèmes d'accumulation de l'erreur de prédiction.

Si les coefficients de chaque modèle étaient constants, c'est-à-dire si $\mathbf{a}_h(k + 1) = \mathbf{a}_h(k)$, la solution à ce problème de minimisation et le calcul de la prédiction correspondante $y(k + h|k)$ seraient très faciles (solution analytique d'un problème de moindres carrés), mais la prédiction imprécise.

Le deuxième mode de réalisation prend en compte l'évolution de l'état de mer à travers la variabilité des coefficients des modèles autorégressifs, et permet d'atteindre une bonne précision avec une complexité et des ressources limitées.

Pour le deuxième mode de réalisation, la nature variant dans le temps de l'état de mer est prise en compte en considérant les p coefficients de chaque modèle autorégressif, comme variant dans le temps. Puisque l'état de mer varie, mais varie peu, on peut considérer que chaque coefficient de chaque modèle autorégressif de la houle évolue de la manière suivante :

$$a_{j,h}(k + 1) = a_{j,h}(k) + \eta_{j,h}(k)$$

où, $\eta_j(k)$, $\forall j = 1,2,...,p,$ est une incertitude stochastique, de type bruit blanc à moyenne nulle, qui est utilisée pour décrire la variation de $a_{j,h}(k)$. Ce qui correspond à utiliser un modèle de type « marche aléatoire » (« *random walk* » en anglais) pour décrire l'évolution de chacun des paramètres du banc de modèles AR.

Avec

$$\boldsymbol{\eta}_h(k) = [\eta_{1,h}(k) \quad \eta_{2,h}(k) \quad \cdots \quad \eta_{p,h}(k)]^T$$

$$\mathbf{a}_h(k + 1) = \mathbf{a}_h(k) + \boldsymbol{\eta}_h(k)$$

on a

$$\begin{aligned}
\mathbf{a}_h(k) \quad &= \mathbf{a}_h(k-1) + \boldsymbol{\eta}_h(k-1) \\
&= \mathbf{a}_h(k-2) + \boldsymbol{\eta}_h(k-2) + \boldsymbol{\eta}_h(k-1) \\
&= \cdots \\
&= \mathbf{a}_h(k-h) + \sum_{v=1}^{h} \boldsymbol{\eta}_h(k-v)
\end{aligned}$$

et donc

$$\mathbf{a}_h(k-h) = \mathbf{a}_h(k) - \sum_{v=1}^{h} \boldsymbol{\eta}_h(k-v)$$

Ce qui permet de relier les valeurs passées des coefficients à leurs valeurs actuelles.

Pour ce deuxième mode de réalisation, l'estimation des coefficients variant dans le temps $\mathbf{a}_h(k)$ pour chaque modèle autorégressif peut être réalisée en appliquant une procédure connue sous le nom de filtre de Kalman linéaire, ou filtre de Kalman (KF, ou « Kalman filter » en anglais).

Pour ce faire, on peut écrire la forme compacte la valeur de la houle à l'instant $k$ donnée par chaque modèle AR :

$$y(k) = \sum_{j=1}^{p} a_{j,h}(k-h)y(k-h-j+1) + w_h(k)$$

comme

$$y(k) = -\mathbf{x}_h(k)^T \mathbf{a}_h(k) + \boldsymbol{\mu}_h(k)$$

où

$$\mathbf{x}_h(k) = [y(k-h) \quad y(k-h-1) \quad \ldots \quad y(k-h-p+1)]^T,$$

$$\mu_h(k) = -\mathbf{x}_h(k)^T \sum_{v=1}^{h} \boldsymbol{\eta}_h(k-v) + w_h(k)$$

Ce qui permet d'obtenir un système d'équations sous forme de représentation d'état qui, pour chaque pas $h$ sur lequel la prédiction doit être calculée, combine l'évolution de la force de la houle à travers un modèle autorégressif et l'évolution des coefficients (inconnus) de ce même modèle :

$$\begin{cases}
\mathbf{a}_h(k+1) &= \mathbf{a}_h(k) + \boldsymbol{\eta}_h(k) \\
y(k) &= \mathbf{x}_h(k)^T \mathbf{a}_h(k) + \boldsymbol{\mu}_h(k)
\end{cases}$$

ou

$$\begin{cases}
\mathbf{a}_h(k+1) &= \mathbf{a}_h(k) + \boldsymbol{\eta}_h(k) \\
y(k) &= \sum_{j=1}^{p} a_{j,h}(k)y(k-h-j+1) + \boldsymbol{\mu}_h(k)
\end{cases}$$

$\mathbf{a}_h(k)$ rentre de manière linéaire dans le système ci-dessus. Une manière d'estimer le vecteur d'état inconnu $\mathbf{a}_h(k)$ de

manière optimale et récursive est d'appliquer à ce système l'algorithme du filtre de Kalman (KF).

Le filtre de Kalman (KF) est un algorithme récursif qui minimise la racine carrée de l'erreur d'estimation des paramètres d'un système linéaire bruité. Pour le système défini ci-dessus, il fournit la solution du problème de minimisation suivant :

$$\min_{\mathbf{a}_h(k)} \left\{ \left(\mathbf{a}_h(0) - \mathbf{a}_h(0|0)\right)^T P_0^{-1} \left(\mathbf{a}_h(0) - \mathbf{a}_h(0|0)\right) \right.$$

$$\left. + \sum_{l=1}^{k} \boldsymbol{\eta}_h(l-1)^T Q_h^{-1} \boldsymbol{\eta}_h(l-1) + \boldsymbol{\mu}_h(l)^T R_h^{-1} \boldsymbol{\mu}_h(l) \right\}$$

où $P_0$ et $Q_h$ sont des matrices réelles carrées de dimension $p \times p$ et $p \times p$ respectivement, $R_h$ un scalaire réel et $a_h(0|0)$ la valeur moyenne de l'état initial $a_h(0)$ inconnu.

À chaque instant $k$, l'algorithme du filtre de Kalman calcule la solution à ce problème en passant par deux étapes.

La première étape est la mise à jour temporelle des estimations :

$$\begin{cases} \mathbf{a}_h(k|k-1) = \mathbf{a}_h(k-1|k-1) \\ P_h(k|k-1) = P_h(k-1|k-1) + Q_h \end{cases}$$

où $\mathbf{a}_h(k|k\text{-}1)$ et $P_h(k|k\text{-}1)$ sont respectivement l'estimation des paramètres $\mathbf{a}_h(k)$ et leur matrice de covariance obtenues en utilisant les mesures à partir de l'instant $k$ - 1, et $\mathbf{a}_h(k\text{-}1|k\text{-}1)$ et $P_h(k\text{-}1|k\text{-}1)$ sont respectivement l'estimation des paramètres $\mathbf{a}_h(k\text{-}1)$ et leur matrice de covariance obtenue en utilisant les mesures à partir de l'instant $k$ - 1.

La seconde étape est la mise à jour des mesures :

$$\begin{cases} K_h(k) = P_h(k|k-1)\mathbf{x}_h(k)\left(\mathbf{x}_h(k)^T P_h(k|k-1)\mathbf{x}_h(k) + R_h\right)^{-1} \\ \mathbf{a}_h(k|k) = \mathbf{a}_h(k|k-1) + K_h(k)\left(y(k) - \mathbf{x}_h(k)^T \mathbf{a}_h(k|k-1)\right) \\ P_h(k|k) = (I - K(k)\mathbf{x}_h(k))P_h(k|k-1) \end{cases}$$

L'application récursive de cet algorithme permet d'obtenir une estimation des paramètres $\mathbf{a}_h(k|k)$ du modèle AR permettant de prédire la houle au pas $h$, à partir du vecteur de mesures passées $\mathbf{x}_h(k) = [y(k - h) \; y(k - h - 1) \; ... \; y(k - h - p + 1)]^T$.

Une fois l'estimation optimale des paramètres $\mathbf{a}_h(k|k)$ obtenue, elle peut être utilisée pour prédire la force d'excitation de la houle au pas $h$ comme il suit :

$$\hat{y}(k + h|k) = \mathbf{x}_{AR}(k)^T \mathbf{a}_h(k|k)$$

où

$$\mathbf{x}_{AR}(k) = [y(k) \quad y(k-1) \quad ... \quad y(k-p+1)]^T,$$

est le vecteur des mesures passées sur les p pas précédant l'instant k actuel.

Selon le deuxième mode de réalisation, le procédé de prédiction d'une caractéristique de la houle sur un horizon M, consiste à appliquer l'algorithme ci-dessus, pour chaque pas de temps h=1,2,...,M, de manière séquentielle ou parallèle.

*3) Troisième mode de réalisation*

Ce troisième mode de réalisation consiste à appliquer une étape supplémentaire de correction (étape d) facultative du procédé), aux prédictions de la caractéristique de la houle générées de manière itérative pour chaque pas de temps futur en utilisant un seul modèle autorégressif à coefficients variables. L'étape de correction permet de réduire l'accumulation de l'erreur inhérente au calcul itératif de la prédiction sur plusieurs pas futurs en utilisant un seul modèle autorégressif et, plus généralement, permet d'obtenir une prédiction de meilleure qualité en décorrélant l'erreur de prédiction courant des mesures passées (« blanchissement » de l'erreur de prédiction).

Cette étape de correction peut être appliquée directement aux prédictions issues d'un modèle autorégressif dont les coefficients variables sont sur estimés par le filtre de Kalman étendu, c'est-à-dire des prédictions issues de la première variante de réalisation, en en améliorant la qualité. Mais elle peut être appliquée également aux prédictions issues d'un modèle autorégressif dont les coefficients variables sont estimés par un filtre de Kalman linéaire, qui, seul, n'a pas la capacité de minimiser l'erreur de prédiction sur plusieurs pas.

On peut considérer donc, comme pour la première variante de réalisation, que l'évolution de la force de la houle peut être décrite par un modèle de la forme :

$$y(k) = a_1(k)y(k-1) + a_2(k)y(k-2) + \cdots + a_p(k)y(k-p) + w(k)$$

où $w(k)$ est une incertitude stochastique, imprédictible, de type bruit blanc avec moyenne nulle et $p$ est l'ordre du modèle AR. Ce qui donne, en forme compacte :

$$y(k) = \mathbf{x}_{AR}(k-1)^T \mathbf{a}(k) + w(k)$$

avec

$$\mathbf{x}_{AR}(k-1) = [y(k-1) \ y(k-2) \ \dots \ y(k-p)]^T$$

$$\mathbf{a}(k) = \begin{bmatrix} a_1(k) \ a_2(k) \ \dots \ a_p(k) \end{bmatrix}^T$$

En procédant comme pour le premier mode de réalisation, on considère que l'évolution de ces coefficients variables dans le temps est décrite par un modèle de marche aléatoire. Ces coefficients peuvent être estimés au moyen d'un filtre de Kalman étendu (comme dans le premier mode de réalisation) ou d'un filtre de Kalman linéaire (comme dans le deuxième mode de réalisation) :

$$\mathbf{a}(k|k) = \begin{bmatrix} a_1(k|k) \ a_2(k|k) \ \dots \ a_p(k|k) \end{bmatrix}^T$$

La prédiction au premier pas peut être donnée par

$$\hat{y}_I(k+1|k) = \mathbf{x}_{AR}(k)^T \mathbf{a}(k|k)$$

Les prédictions aux pas futurs suivants peuvent s'obtenir de manière itérative comme il suit :

$$\hat{y}_I(k+h|k) = a_1(k|k)\,\hat{y}_I(k+h-1|k) + a_2(k|k)\,\hat{y}_I(k+h-2|k) + \dots$$
$$+ a_p(k|k)\,\hat{y}_I(k+h-p-1|k)$$

Ce qui correspond à l'algorithme suivant (le même qu'on applique à la fin de la première variante)

- on utilise les entrées : mesures de la houle paramètres estimés , horizon de prédiction $M$
- pour calculer les sorties : estimations futures de la caractéristique de la houle . Pour ce faire,

    .i. on initialise $s = 1$ et $\mathbf{x} = [y(k)\ y(k-1)\ \dots\ y(k-p+1)]^T$
    .ii. on calcule les prédictions $\hat{y}_I(k+s|k)$

$$\begin{cases} y_f = \mathbf{x}(k)^T \mathbf{a}(k|k) \\ \hat{y}_I(k+s|k) = y_f \\ \mathbf{x} = \begin{bmatrix} y_f & \mathbf{x}(1:p-1)^T \end{bmatrix}^T \\ s = s+1 \end{cases}$$

.iii. si $s \leq M$ ($M$ horizon de prédiction), on réitère l'étape ii, sinon on arrête.

Dans le troisième mode de réalisation, les prédictions issues de cette première étape (à l'exclusion de celle au premier pas, qui n'a pas besoin de correction) sont corrigées dans une deuxième étape dans le but de les améliorer.
L'erreur de prédiction commise au pas h dans le futur est :

$$\epsilon(k+h) = y(k+h) - \hat{y}_I(k+h|k)$$

On cherche à calculer une nouvelle prédiction telle que la nouvelle erreur de prédiction obtenue se rapproche le plus possible d'un bruit blanc. Pour ce faire on modélise l'erreur de prédiction au pas $h$ issue de la première étape comme :

$$\epsilon(k+h) = \sum_{j=1}^{p_{\alpha,h}} \alpha_{j,h}(k) y(k-j+1) + \xi(k)$$

où $p_{\alpha,h}$ est l'ordre du modèle de l'erreur, qui est considéré comme une combinaison linéaire des mesures présentes et passées de la caractéristique de la houle à travers les paramètres variables, $\alpha_{j,h} \forall j = 1,2,...,p_{\alpha,h}$ et $\xi(k)$ est une incertitude stochastique, imprédictible, de type bruit blanc avec moyenne nulle. L'ordre du modèle $p_{\alpha,h}$ peut être différent pour des pas $h$ différents.
En forme compacte cela donne

$$\epsilon(k+h) = \mathbf{x}_{AR}(k)^T \boldsymbol{\alpha}_h(k) + \xi(k)$$

où

$$\begin{cases} \mathbf{x}_{AR}(k) = \begin{bmatrix} y(k) & y(k-1) & ... & y(k-p_{\alpha,h}+1) \end{bmatrix}^T \\ \boldsymbol{\alpha}_h(k) = \begin{bmatrix} \alpha_{1,h}(k) & \alpha_{2,h}(k-1) & ... & \alpha_{p_{\alpha,h},h}(k-p_{\alpha,h}+1) \end{bmatrix}^T \end{cases}$$

En supposant que l'évolution des paramètres $\alpha_h(k)$ du modèle d'erreur de prédiction est décrite par un modèle de type marche aléatoire (comme celui utilisé pour les coefficients du modèle autorégressif de la caractéristique de la houle dans la première étape), ils peuvent être estimés en appliquant un (deuxième) filtre de Kalman à l'équation d'état suivante

$$\begin{cases} \boldsymbol{\alpha}_h(k+1) = \boldsymbol{\alpha}_h(k) + \boldsymbol{\eta}_\alpha(k) \\ \epsilon(k+h) = \mathbf{x}_{AR}(k)^T \boldsymbol{\alpha}_h(k) + \xi(k) \end{cases}$$

où $\eta_\alpha(k)$ est un vecteur d'incertitudes stochastiques, de type bruit blanc à moyenne nulle.
Puisque l'erreur $\varepsilon(k+h)$ est inconnue au temps $k$, car la mesure $y(k+h)$ est inconnue, on ne peut pas l'utiliser directement. Toutefois, il est possible de la décaler dans le temps, pour la rendre utilisable, par exemple de la manière suivante :

$$\epsilon(k) = \mathbf{x}_{AR}(k-h)^T \boldsymbol{\alpha}_h(k-h) + \xi(k-h)$$

En utilisant la première équation, on obtient :

$$\begin{cases} \boldsymbol{\alpha_h}(k) & = & \boldsymbol{\alpha_h}(k-1) + \boldsymbol{\eta}_\alpha(k-1) \\ & = & \boldsymbol{\alpha_h}(k-2) + \boldsymbol{\eta}_\alpha(k-1) + \boldsymbol{\eta}_\alpha(k-2) \\ & \vdots & \\ & = & \boldsymbol{\alpha_h}(k-h) + \boldsymbol{\eta}_\alpha(k-1) + \boldsymbol{\eta}_\alpha(k-2) + \ldots + \boldsymbol{\eta}_\alpha(k-h) \\ & = & \boldsymbol{\alpha_h}(k-h) + \sum_{j=1}^{h} \boldsymbol{\eta}_\alpha(k-j) \end{cases}$$

Et la première équation décalée dans le temps, peut être récrite comme

$$\epsilon(k) = \mathbf{x}_{AR}(k-h)^T \boldsymbol{\alpha_h}(k) - \mathbf{x}_{AR}(k-h)^T \sum_{j=1}^{h} \boldsymbol{\eta}_\alpha(k-j) + \xi(k-h)$$

ou, de manière équivalente

$$\epsilon(k) = \mathbf{x}_{AR}(k-h)^T \boldsymbol{\alpha_h}(k) + \mu(k)$$

où

$$\mu(k) = -\mathbf{x}_{AR}(k-h)^T \sum_{j=1}^{h} \boldsymbol{\eta}_\alpha(k-j) + \xi(k-h)$$

Ce qui permet de définir le nouveau système :

$$\begin{cases} \boldsymbol{\alpha_h}(k+1) = \boldsymbol{\alpha_h}(k) + \boldsymbol{\eta}_\alpha(k) \\ \epsilon(k) = \mathbf{x}_{AR}(k-h)^T \boldsymbol{\alpha_h}(k) + \mu(k) \end{cases}$$

auquel on applique le filtre de Kalman, en utilisant les matrices de covariance $Q_h$ et $R_h$ respectivement de $\eta_\alpha$ et $\mu$.
La partie prédictible de l'erreur de prédiction,

$$\hat{\epsilon}(k) = \mathbf{x}_{AR}(k-h)^T \boldsymbol{\alpha_h}(k)$$

constitue la correction à appliquer à chaque pas $h$, $h \geq 2$, à la prédiction $\hat{y}_I(k+h|k)$ issue de la première étape.
La prédiction finale pour le pas $h$, $h \geq 2$, peut donc être

$$\hat{y}_{II}(k+h|k) = \hat{y}_I(k+h|k)\hat{\epsilon}(k) + \mathbf{x}_{AR}(k-h)^T \boldsymbol{\alpha_h}(k)$$

## Revendications

1. Procédé de commande d'un système houlomoteur, dans lequel on prédit une caractéristique résultante de la houle sur ledit système houlomoteur, ladite caractéristique est la force exercée par la houle sur ledit système houlomoteur ou l'élévation de la houle par rapport audit système houlomoteur, **caractérisé en ce qu'**on réalise les étapes suivantes :

   a) on mesure ladite caractéristique pour au moins un pas de temps ;

b) on prédit ladite caractéristique pour au moins deux pas de temps futurs en mettant en oeuvre les étapes suivantes :

i) on construit un seul modèle autorégressif de la houle pour tous les pas de temps futurs ou plusieurs modèles autorégressifs de la houle : un pour chaque pas de temps futur, ledit modèle autorégressif de la houle reliant ladite caractéristique d'un pas de temps futur auxdites caractéristiques mesurées, au moyen de coefficients variables dans le temps ;

ii) on détermine lesdits coefficients variables dans le temps au moyen d'un modèle de marche aléatoire au moyen d'un banc de filtres de Kalman linéaires lorsqu'on construit plusieurs modèles autorégressifs de la houle, ou au moyen d'un filtre de Kalman étendu lorsqu'on construit un seul modèle autorégressif de la houle, ledit modèle autorégressif de la houle s'écrivant par une formule du type : $\hat{y}(k|k$ - $1) = x_{AR}(k$ - $1)^T\mathbf{a}(k)$ avec $\hat{y}(k|k$ - $1)$ la caractéristique prédite au pas de temps k, $x_{AR}(k$ - $1)$ le vecteur des caractéristiques antérieures au pas de temps k et $\mathbf{a}(k)$ le vecteur des coefficients variables dans le temps dudit modèle autorégressif de la houle au pas de temps k et en mettant en oeuvre les étapes suivantes :

(1) on considère le pas de temps p=k ;
(2) on construit le vecteur $\mathbf{x}_{AR}(p$ - $1)^T$ des caractéristiques antérieures à l'instant p ;
(3) on détermine ladite caractéristique $\hat{y}(p + 1|k)$ pour le pas temps p+1 au moyen dudit vecteur $\mathbf{x}_{AR}(p$ - $1)^T$ et dudit vecteur $\mathbf{a}(k)$ desdits coefficients variables dans le temps ; et
(4) on réitère les étapes (2) et (3) pour les N pas de temps futurs; et

iii) on détermine ladite caractéristique pour lesdits pas de temps futurs au moyen dudit modèle autorégressif de la houle, desdits coefficients variables dans le temps déterminés et desdites mesures de ladite caractéristique ; et

c) on commande ledit système houlomoteur en fonction de ladite caractéristique prédite afin d'améliorer le rendement du système houlomoteur pour la conversion de l'énergie des vagues en énergie électrique, pneumatique ou hydraulique.

2. Procédé selon l'une des revendications précédentes, dans lequel ledit modèle de marche aléatoire s'écrit par une formule du type : $a_j(k + 1) = a_j(k) + \eta_j(k)$ qui permet de calculer l'évolution au pas de temps k+1 de chaque coefficient variable $a_i$ dudit modèle autorégressif, en partant de sa valeur $a_j(k)$ au pas de temps k, de l'incertitude stochastique correspondante $\eta_j(k)$ au pas de temps k.

3. Procédé selon l'une des revendications précédentes, dans lequel pour chaque pas de temps futur p :

(1) on construit un modèle autorégressif de la houle ;
(2) on détermine lesdits coefficients variables dans le temps dudit modèle autorégressif dudit pas de temps p au moyen d'un banc de filtres de Kalman adaptatifs ; et
(3) on détermine ladite caractéristique au moyen dudit modèle autorégressif dudit pas de temps p et desdits coefficients variables dudit modèle autorégressif dudit pas de temps p.

4. Procédé selon la revendication 3, dans lequel ledit modèle autorégressif de la houle s'écrit par une formule du type :

$$\hat{y}(k + h|k) = \sum_{j=1}^{p} a_{j,h}(k)y(k - j + 1)$$

avec $\hat{y}(k + h|k)$ la caractéristique prédite au pas de temps k+h,
$y(k$ - $j + 1)$ la caractéristique mesurée au pas de temps k-j+1, et
$a_{j,h}(k)$ les coefficients variables dans le temps dudit modèle.

5. Procédé selon l'une des revendications 3 ou 4, dans lequel on détermine lesdites caractéristiques desdits différents pas de temps futurs séquentiellement ou parallèlement.

6. Procédé selon l'une des revendications précédentes, dans lequel on corrige ladite caractéristique pour lesdits pas de temps futurs de manière à minimiser l'erreur de prédiction.

**7.** Procédé selon la revendication 6, dans lequel on corrige ladite caractéristique au moyen d'un filtre de Kalman.

**8.** Procédé selon l'une des revendications précédentes, dans lequel ledit système flottant est un système houlomoteur qui convertit l'énergie des vagues en énergie électrique, pneumatique ou hydraulique, une plateforme flottante, ou une éolienne flottante.

**Patentansprüche**

**1.** Verfahren zur Steuerung eines Wellenkraftwerks, wobei ein aus dem Seegang resultierendes Merkmal auf dem Wellenkraftwerk vorhergesagt wird, wobei das Merkmal die vom Seegang auf das Wellenkraftwerk ausgeübte Kraft oder die Erhöhung des Seegangs bezüglich des Wellenkraftwerks ist, **dadurch gekennzeichnet, dass** die folgenden Schritte durchgeführt werden:

a) das Merkmal wird für mindestens einen Zeitschritt gemessen;
b) das Merkmal wird für mindestens zwei zukünftige Zeitschritte vorhergesagt, indem die folgenden Schritte durchgeführt werden:

i) es werden ein einziges autoregressives Modell des Seegangs für alle zukünftigen Zeitschritte oder mehrere autoregressive Modelle des Seegangs konstruiert: eines für jeden zukünftigen Zeitschritt, wobei das autoregressive Modell des Seegangs das Merkmal eines zukünftigen Zeitschritts mittels zeitlich variabler Koeffizienten mit den gemessenen Merkmalen verbindet;
ii) die zeitlich variablen Koeffizienten werden mittels eines Random-Walk-Modells mittels einer Bank von linearen Kalman-Filtern, wenn mehrere autoregressive Modelle des Seegangs konstruiert werden, oder mittels eines erweiterten Kalman-Filters bestimmt, wenn ein einziges autoregressives Modell des Seegangs konstruiert wird, wobei das autoregressive Modell des Seegangs durch eine Formel des Typs: $\hat{y}(k|k - 1) = x_{AR}(k - 1)^T a(k)$ ausgedrückt wird, mit $\hat{y}(k|k - 1)$ dem im Zeitschritt k vorhergesagten Merkmal, $x_{AR}(k - 1)$ dem Vektor der Merkmale vor dem Zeitschritt k und a(k) dem Vektor der zeitlich variablen Koeffizienten des autoregressiven Modells des Seegangs im Zeitschritt k und unter Verwendung der folgenden Schritte:

(1) der Zeitschritt p=k wird berücksichtigt;
(2) der Vektor $x_{AR}(p - 1)^T$ der Merkmale vor dem Zeitpunkt p wird konstruiert;
(3) das Merkmal $\hat{y}(p + 1|k)$ wird für den Zeitschritt p+1 mittels des Vektors $x_{AR}(p - 1)^T$ und des Vektors a(k) der zeitlich variablen Koeffizienten bestimmt; und
(4) die Schritte (2) und (3) werden für die N zukünftigen Zeitschritte wiederholt; und

iii) das Merkmal für die zukünftigen Zeitschritte wird mittels des autoregressiven Modells des Seegangs, der bestimmten zeitlich variablen Koeffizienten und der Messungen des Merkmals bestimmt; und

c) das Wellenkraftwerk wird abhängig von dem vorhergesagten Merkmal gesteuert, um die Arbeitsleistung des Wellenkraftwerks für die Umwandlung der Energie der Wellen in elektrische, pneumatische oder hydraulische Energie zu verbessern.

**2.** Verfahren nach dem vorhergehenden Anspruch, wobei das Random-Walk-Modell durch eine Formel des Typs: $a_j(k + 1) = a_j(k) + \eta_j(k)$ ausgedrückt wird, die es ermöglicht, die Entwicklung im Zeitschritt k+1 jedes variablen Koeffizienten ai des autoregressiven Modells ausgehend von seinem Wert $a_j(k)$ im Zeitschritt k, der entsprechenden stochastischen Ungewissheit $\eta_j$(k) im Zeitschritt k zu berechnen.

**3.** Verfahren nach einem der vorhergehenden Ansprüche, wobei für jeden zukünftigen Zeitschritt p:

(1) ein autoregressives Modell des Seegangs konstruiert wird;
(2) die zeitlich variablen Koeffizienten des autoregressiven Modells des Zeitschritts p mittels einer Bank von adaptiven Kalman-Filtern bestimmt werden; und
(3) das Merkmal mittels des autoregressiven Modells des Zeitschritts p und der variablen Koeffizienten des autoregressiven Modells des Zeitschritts p bestimmt wird.

**4.** Verfahren nach Anspruch 3, wobei das autoregressive Modell des Seegangs durch eine Formel des Typs ausgedrückt wird:

$$\hat{y}(k + h|k) = \sum_{j=1}^{p} a_{j,h}(k) y(k - j + 1)$$

mit

$\hat{y}(k + h|k)$ ) dem im Zeitschritt k+h vorhergesagten Merkmal,

$y(k - j + 1)$ dem im Zeitschritt k-j+1 gemessenen Merkmal, und

$a_{j,h}(k)$ den zeitlich variablen Koeffizienten des Modells.

5. Verfahren nach einem der Ansprüche 3 oder 4, wobei die Merkmale der verschiedenen zukünftigen Zeitschritte sequentiell oder parallel bestimmt werden.

6. Verfahren nach einem der vorhergehenden Ansprüche, wobei das Merkmal für die zukünftigen Zeitschritte korrigiert wird, um den Vorhersagefehler zu minimieren.

7. Verfahren nach Anspruch 6, wobei das Merkmal mittels eines Kalman-Filters korrigiert wird.

8. Verfahren nach einem der vorhergehenden Ansprüche, wobei das schwimmende System ein Wellenkraftwerk, das die Energie der Wellen in eine elektrische, pneumatische oder hydraulische Energie umwandelt, eine schwimmende Plattform oder eine schwimmende Windkraftanlage ist.

**Claims**

1. Method for controlling an ocean wave system, wherein a characteristic resulting from the swell on said ocean wave system is predicted, said characteristic is the force exerted by the swell on said ocean wave system or the elevation of the swell with respect to said ocean wave system, **characterized in that** the following steps are carried out:

   a) said characteristic is measured for at least one time step;
   b) said characteristic is predicted for at least two future time steps by implementing the following steps:

   i) a single autoregressive model of the swell is constructed for all the future time steps or several autoregressive models of the swell are constructed: one for each future time step, said autoregressive model of the swell linking said characteristic of a future time step to said measured characteristics, by means of time-variable coefficients;
   ii) said time-variable coefficients are determined by a random walk model by means of a bank of linear Kalman filters when several autoregressive models of the swell are constructed, or by means of an extended Kalman filter when a single autoregressive model of the swell is constructed, said autoregressive model of the swell being expressed by a formula of the type: $\hat{y}(k|k - 1) = x_{AR}(k - 1)^T a(k)$ with $\hat{y}(k|k - 1)$ the characteristic predicted at the time step **k, $x_{AR}(k - 1)$** the vector of the characteristics prior to the time step k and $a(k)$ the vector of the time-variable coefficients of said autoregressive model of the swell at the time step k and by implementing the following steps:

      (1) the time step p=k is considered;
      (2) the vector $x_{AR}(p - 1)^T$ of the characteristics prior to the instant p is constructed;
      (3) said characteristic $\hat{y}(p + 1|k)$ is determined for the time step p + 1 by means of said vector $x_{AR}(p - 1)^T$ and of said vector $a(k)$ of said time-variable coefficients; and
      (4) the steps (2) and (3) are reiterated for the N future time steps; and

   iii) said characteristic is determined for said future time steps by means of said autoregressive model of the swell, of said determined time-variable coefficients and of said measurements of said characteristic; and

   c) said ocean wave system is controlled as a function of said predicted characteristic in order to enhance the efficiency of the ocean wave system for the conversion of wave energy into electrical, pneumatic or hydraulic energy.

**2.** Method according to the preceding claim, wherein said random walk model is expressed by a formula of the type: $a_j(k + 1) = a_j(k) + \eta_j(k)$ which makes it possible to calculate the change at the time step k + 1 of each variable coefficient ai of said autoregressive model, by starting from its value $a_j(k)$ at the time step k, and from the corresponding stochastic uncertainty $\eta_j(k)$ at the time step k.

**3.** Method according to one of the preceding claims, wherein, for each future time step p:

(1) an autoregressive model of the swell is constructed;
(2) said time-variable coefficients of said autoregressive model of said time step p are determined by means of a bank of adaptive Kalman filters; and
(3) said characteristic is determined by means of said autoregressive model of said time step p and of said variable coefficients of said autoregressive model of said time step p.

**4.** Method according to Claim 3, wherein said autoregressive model of the swell is expressed by a formula of the type:

$$\hat{y}(k + h|k) = \sum_{j=1}^{p} a_{j,h}(k)y(k - j + 1)$$

with $\hat{y}(k + h|k)$ the characteristic predicted at the time step k + h,
$y(k - j + 1)$ the characteristic measured at the time step k - j + 1 and
$a_{j,h}(k)$ the time-variable coefficient of said model.

**5.** Method according to either of Claims 3 and 4, wherein said characteristics of said different future time steps are determined sequentially or in parallel.

**6.** Method according to one of the preceding claims, wherein said characteristic for said future time steps is corrected so as to minimise the prediction error.

**7.** Method according to Claim 6, wherein said characteristic is corrected by means of a Kalman filter.

**8.** Method according to one of the preceding claims, wherein said floating system is an ocean wave system which converts wave energy into electrical, pneumatic or hydraulic energy, a floating platform or a floating wind turbine.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2876751
- FR 2973448

- WO 2009081042 A

**Littérature non-brevet citée dans la description**

- **FRANCESCO FUSCO ; JOHN V RINGWOOD.** Short-term wave forecasting for real-time control of wave energy converters. *Sustainable Energy, IEEE Transactions on,* 2010, vol. 1 (2), 99-106
- Identification for long-range prédictive control. **DS SHOOK ; C MOHTADI ; SL SHAH.** IEE Proceedings D (Control Theory and Applications). IET, 1991, vol. 138, 75-84
- **B FISCHER ; P KRACHT ; S PEREZ-BECKER.** On-line-algorithm using adaptive filters for short-term wave prédiction and its implementation. *Proceedings of the 4th International Conférence on Ocean Energy (ICOE), Dublin, Ireland,* 2012, 17-19

- **FRANCESCO FUSCO.** Real-Time forecasting and control for oscillating wave energy devices. *phD Thesis,* 01 Juillet 2012, 1-282
- forecasting ocean waves: comparing a physics-based model with statistical models. **GORDON REIKARD et al.** Coastal engineering. Elservier, 20 Décembre 2010, vol. 58, 409-416
- Wave prédiction and fuzzy logic control of wave energy converters in irregulars waves. **SCHOEN MP et al.** Control and automation, 2008, 16th Mediterranean conférence on. IEEE, 25 Juin 2008, 767-772